(19) 

(11) **EP 3 985 564 B1**

(12) **EUROPEAN PATENT SPECIFICATION**

(45) Date of publication and mention of the grant of the patent:
**23.09.2026 Bulletin 2026/39**

(21) Application number: **20202319.8**

(22) Date of filing: **16.10.2020**

(51) International Patent Classification (IPC):
***G06N 3/00*** *(2023.01)* ***G06N 3/04*** *(2023.01)*
***G06N 3/08*** *(2023.01)* ***G06N 5/02*** *(2023.01)*
***G06N 5/04*** *(2023.01)* ***G06N 20/00*** *(2019.01)*

(52) Cooperative Patent Classification (CPC):
**G06N 5/022; G06N 3/006; G06N 3/042; G06N 3/044; G06N 3/0442; G06N 3/08; G06N 3/09; G06N 3/092; G06N 5/046; G06N 5/048; G06N 20/00**

(54) **METHOD FOR PREDICTION OF RELATIONS IN A KNOWLEDGE GRAPH REPRESENTING AN INDUSTRIAL SYSTEM USED TO MONITOR AND CONTROL THE INDUSTRIAL SYSTEM**

VERFAHREN ZUR VORHERSAGE VON BEZIEHUNGEN IN EINEM WISSENSDIAGRAMM, DAS EIN INDUSTRIELLES SYSTEM DARSTELLT, ZUR ÜBERWACHUNG UND STEUERUNG DES INDUSTRIELLEN SYSTEMS

PROCÉDÉ DE PRÉDICTION DE RELATIONS DANS UN GRAPHE DE CONNAISSANCES REPRÉSENTANT UN SYSTÈME INDUSTRIEL UTILISÉ POUR SURVEILLER ET COMMANDER LE SYSTÈME INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2022 Bulletin 2022/16**


(73) Proprietor: **Siemens Aktiengesellschaft**
**80333 München (DE)**

(72) Inventors:
- **Hildebrandt, Marcel**
  **80634 München (DE)**
- **Joblin, Mitchell**
  **81825 München (DE)**
- **Liu, Yushan**
  **81737 München (DE)**
- **Ringsquandl, Martin**
  **83022 Rosenheim (DE)**

(74) Representative: **Siemens Patent Attorneys**
**Postfach 22 16 34**
**80506 München (DE)**



(56) References cited:
**EP-A1- 3 667 576**

- **YUSHAN LIU ET AL: "Integrating Logical Rules Into Neural Multi-Hop Reasoning for Drug Repurposing", ARXIV.ORG, CORNELL UNIVERSITY LIBRARY, 201 OLIN LIBRARY CORNELL UNIVERSITY ITHACA, NY 14853, 10 July 2020 (2020-07-10), XP081719294**
- **RINGSQUANDL MARTIN ET AL: "Graph-based predictions and recommendations in flexible manufacturing systems", IECON 2016 - 42ND ANNUAL CONFERENCE OF THE IEEE INDUSTRIAL ELECTRONICS SOCIETY, IEEE, 23 October 2016 (2016-10-23), pages 6937 - 6942, XP033033987, DOI: 10.1109/IECON.2016.7793785**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 3 985 564 B1

## Description

The invention relates to a computer-implemented method for prediction of relations in a knowledge graph representing an industrial system, in particular a manufacturing system, stored in a database.

An industrial knowledge graph can be used as an intelligible domain model to support the integration of multiple data sources and to provide a formal semantic representation to enable inference and machine processing. There is a wide variety of real-world information which can be described in the form of knowledge graphs. A knowledge graph comprises nodes and edges. The nodes correspond to entities whereas the edges correspond to relations between these different entities. In an industrial manufacturing system, there can be a plurality of different kinds of entities representing for example production plants, products, product components, production processes, locations, etc. The edges of the knowledge graph can indicate relationships between the different entities such as "is located in", "is part of", or "follows after (a production step)". A knowledge graph allows the integration of information or data from multiple data sources and provides a semantic representation that can be used for inference.

However, in many scenarios, knowledge graphs stored in a database are incomplete. For example, there can be missing links or relations between entities represented by nodes within the knowledge graph. For instance, in a manufacturing industrial system providing flexible manufacturing, a completion of a knowledge graph can be required to perform skill matching. For flexible manufacturing, a production step should be matched to a production module of the production facility that does offer the operation skills to carry out the manufacturing operation. Within a production facility, different production modules are connected to various ports along a production line of the production facility. Specific production modules can be exchanged depending on the needs of the product manufactured by the production facility. A goal can be for instance to predict the production modules that are able to manufacture the product in a minimal timespan. The production process performed to manufacture the product can consist of several production operations or operation steps. Each production step has corresponding operation skill requirements detailing the properties of the product and what tasks or operations exactly need to be performed. The operation skills offered by the production module, i.e. its functionalities, shall meet these skill requirements in order to provide a valid match.

In a link prediction setting, the production modules, production operations and operation skills can be represented by nodes in a knowledge graph. Possible relations between the different node entities in the knowledge graph are e.g. "performs", "offers", or "requires", stating the fact that a production module of the production facility is able to perform a production operation, that a production module offers a certain operation skill or that a production operation requires a specific operation skill, respectively. Information about the skill requirements, offered operation skills and known matches between production modules and production operations are present in a knowledge graph which can be stored in a local or remote database. A relevant related approach can be found in Yushan Liu et al: "Integrating Logical Rules Into Neural Multi-Hop Reasoning for Drug Repurposing",ARXIV.ORG, 10 July 2020.

Conventionally, skill matching is mainly done manually by domain experts who have knowledge about the features of the production modules and understand the requirements of each production operation. The domain experts may inspect an existing knowledge graph to predict or infer missing information, in particular missing links between entities. However, this manual process is very time-consuming, expensive and not feasible for large amounts of data. Further, the results might not be reliable due to human errors and cognitive bias of the experts.

Accordingly, it is an object of the present invention to provide a method and apparatus for prediction of relations in a knowledge graph representing an industrial manufacturing system which can be used to control and monitor the industrial manufacturing system.

This object is achieved according to a first aspect by a computer-implemented method for prediction of relations in a knowledge graph comprising the features of claim 1.

The invention provides according to a first aspect a computer-implemented method for matching a production step to be performed in an industrial manufacturing system to a production module of a production facility of the industrial manufacturing system that offers operation skills for carrying out the production step, by prediction of relations in a knowledge graph representing an industrial manufacturing system and stored in a database, wherein the method comprises the steps of:

receiving via an interface a query comprising a subject-predicate pair corresponding to a subject entity of the industrial manufacturing system represented by a source node in the knowledge graph and to a relation of said subject entity represented by an edge from said source node;

performing automatically policy-guided transitions by a reinforcement learning agent starting from the source node of the knowledge graph along edges of the knowledge graph to target entities represented by target nodes of the knowledge graph to extract different paths between the source node and the target nodes, wherein for each performed transition, a transition probability is obtained from a discrete stochastic policy;

calculating a path probability for each extracted path on the basis of the obtained transition probabilities of the transitions between the source node and the target node of the respective path; and

ranking the extracted paths according to the calculated path probabilities to select a target entity of said industrial manufacturing system output via said interface.

The stored knowledge graph of the industrial manufacturing system stored in the database comprises nodes corresponding to entities of the industrial manufacturing system and edges corresponding to relations between entities of the industrial manufacturing system.

The entities of the industrial manufacturing system represented by nodes of the knowledge graph comprise production modules of a production facility,

production operations and
operation skills offered by production modules.

The production modules are connected to various ports along a production line of the production facility and can be exchanged depending on the needs of a product to be manufactured.

In a further possible embodiment of the computer-implemented method according to the first aspect of the present invention, the knowledge graph stored in the database comprises a list of triples wherein each triple includes a subject corresponding to a source node of the knowledge graph representing a subject entity of the industrial system, an object corresponding to a target node of the knowledge graph representing a target entity of the industrial manufacturing system, and
a predicate corresponding to an edge of the knowledge graph between the source node and the target node of the knowledge graph and representing a relationship between the subject entity and the target entity of the industrial manufacturing system.

In a further possible embodiment of the computer-implemented method according to the first aspect of the present invention, the nodes and edges of the stored knowledge graph stored in the database are represented by vector space embeddings used by the reinforcement learning agent to navigate on the knowledge graph.

In a further possible embodiment of the computer-implemented method according to the first aspect of the present invention, a history of the transitions performed by the reinforcement learning agent is stored and encoded by a recurrent neural network and scored against the vector space embeddings of all possible transitions.

In a further possible embodiment of the computer-implemented method according to the first aspect of the present invention, the recurrent neural network is trained in a supervised training process using a set of true triples each comprising a subject, a predicate, and an object.

In a still further possible embodiment of the computer-implemented method according to the first aspect of the present invention, a set of logical rules is provided and incorporated in the training process of the recurrent neural network wherein each logical rule comprises a rule head and a rule body.

In a still further possible embodiment of the computer-implemented method according to the first aspect of the present invention, each logical rule of the provided set of logical rules comprises an associated confidence value.

In a still further possible embodiment of the computer-implemented method according to the first aspect of the present invention, the ranked extracted paths are filtered according to the rule body of at least one logical rule of the provided set of logical rules.

In a further possible embodiment of the computer-implemented method according to the first aspect of the present invention, for each path extracted by the reinforcement learning agent during the training process, a positive reward is assigned to the reinforcement learning agent if the target entity of the respective extracted path is correct.

In a still further possible embodiment of the computer-implemented method according to the first aspect of the present invention, for each path extracted by the reinforcement learning agent during the training process, an additional positive reward is assigned to the reinforcement learning agent if the extracted path corresponds to a rule body of a logical rule within the provided set of logical rules.

In a still further possible embodiment of the computer-implemented method according to the first aspect of the present invention, the additional positive reward assigned to the reinforcement learning agent during the training process is derived from the confidence value of the respective logical rule.

In a still further possible embodiment of the computer-implemented method according to the first aspect of the present invention, a path is expanded stepwise by the reinforcement learning agent until a predefined maximum path length is reached.

With the computer-implemented method according to the first aspect of the present invention, it is possible to expand and update a knowledge graph representing an industrial manufacturing system.

The updated knowledge graph can be used to monitor and/or to control the entities of the respective industrial manufacturing system.

In a possible embodiment, the computer-implemented method according to the present invention uses a hybrid approach that combines logical rules with representation learning. In this embodiment, domain knowledge and back-

ground information can be explicitly encoded as logical rules and integrated into a training process, in particular into a training process for training a recurrent neural network.

The computer-implemented method according to the present invention is scalable to large amounts of data and can handle uncertainties as well as noise in the available data. The computer-implemented method further provides more transparency and explanations in the form of logical rules and extracted paths that are not available in conventional black box machine learning methods that are only based on knowledge graph embeddings.

The knowledge graph forming a data model stored in a database can in a possible embodiment be interactively adapted and updated via a user interface exchanging feedback and input from domain experts.

The invention further provides according to a further aspect a control apparatus for controlling an industrial system, in particular an industrial manufacturing system, which includes at least one production facility having production modules offering production skills to perform production operations on the basis of an industrial knowledge graph stored in a database connected to said control apparatus,

wherein the control apparatus comprises an interface and a controller adapted to execute the computer-implemented method according to the first aspect of the present invention.

In the following, possible embodiments of the different aspects of the present invention are described in more detail with reference to the enclosed figures.

Fig. 1 shows a flowchart of a possible exemplary embodiment of a computer-implemented method according to the first aspect of the present invention;

Fig. 2 shows a possible exemplary computer architecture used by the computer-implemented method according to the present invention;

Fig. 3 shows an example illustrating a training process;

Fig. 4 shows an example for illustrating an inference process performed by the method according to the present invention.

The computer-implemented method according to the present invention can be used for prediction of relations in a knowledge graph KG representing an industrial manufacturing system. The industrial system can be a complex industrial system, for instance an industrial manufacturing system having one or more production lines with production modules which offer production or operation skills for performing production operations in a flexible production process to manufacture a certain product. In many applications, it is required to update the knowledge graph KG of the industrial system by performing link prediction. In a possible use case, an entire production factory can be integrated in a knowledge graph KG stored in a local or remote database. Already in a planning phase of a production factory and also during construction and operation, the stored knowledge graph KG can form the basis for getting fast insights into dependencies and relations that allows for comprehensive supervision and monitoring of the production facility. A knowledge graph KG can form the basis for a controller executing or triggering automatically actions performed by actuators in response to events which can be detected by means of sensor data generated by sensors implemented at the respective industrial manufacturing system.

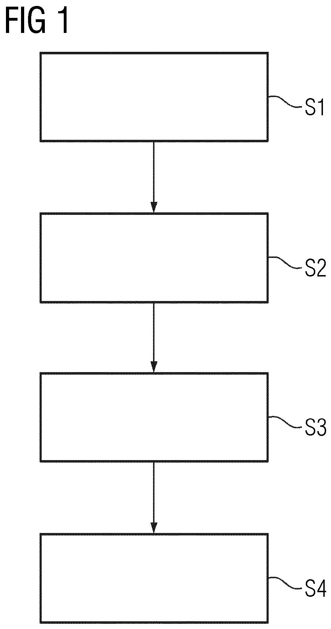

The stored knowledge graph KG can comprise nodes corresponding to entities of the industrial system and edges corresponding to relations or relationships between entities of the respective industrial system. A knowledge graph KG can be described in terms of a list of triples. Each triple can include a subject s corresponding to a source node of the knowledge graph KG representing a subject entity of the industrial system, an object o corresponding to a target node of the knowledge graph KG representing a target entity of the industrial system and a predicate p corresponding to an edge of the knowledge graph KG between a source node and a target node of the knowledge graph KG and representing a relationship between the subject entity and the target entity of the industrial system. The predicate p stands for the relation between the subject s and the object o and indicates a type of edge connecting the two entities. The triples of the knowledge graph KG describe true known facts. The stored knowledge graph KG can be incomplete in the sense that triples corresponding to true facts are not contained in the respective knowledge graph KG. In this scenario, a learning task can be performed to infer missing links in the knowledge graph KG to find absent true facts. This learning task is commonly also referred to as a link prediction or knowledge graph completion. The computer-implemented method as illustrated in the embodiment of Fig. 1 is able to provide predictions of relations in an existing knowledge graph KG. In this way, the knowledge graph KG is expanded and updated and can be used for monitoring and/or to control the respective industrial system more efficiently and in a more reliable manner. Further, the monitoring or control of the industrial system becomes more transparent.

In the embodiment illustrated in Fig. 1, the computer-implemented method for prediction of relations in a knowledge graph KG comprises several main steps.

In a first step S1, a query Q comprising a subject-predicate pair (s, p) can be received via an interface. The interface can comprise a user interface or a data interface. The subject-predicate pair of the query Q corresponds to a subject entity of the industrial manufacturing system represented by a source node in the stored knowledge graph KG and to a relation of said subject entity represented by an edge from said source node.

In a further step S2, policy-guided transitions are performed automatically by a reinforcement learning agent starting from the source node of the knowledge graph KG along edges of the knowledge graph KG to target entities represented by target nodes of the knowledge graph KG to extract different paths between the source node and the target nodes. For each performed transition, a transition probability is obtained from a policy, in particular a discrete stochastic policy. The policy is trained in a training process, in particular in a training process of a deep neural network, especially a recurrent neural network, RNN.

In a further step S3, a path probability can be calculated by a processor for each extracted path on the basis of the obtained transition probabilities of the transitions between the source node and the target node of the respective path. Finally, a ranking of the extracted paths is performed in step S4 according to the calculated path probabilities to select a target entity of the industrial manufacturing system which can be output via the interface.

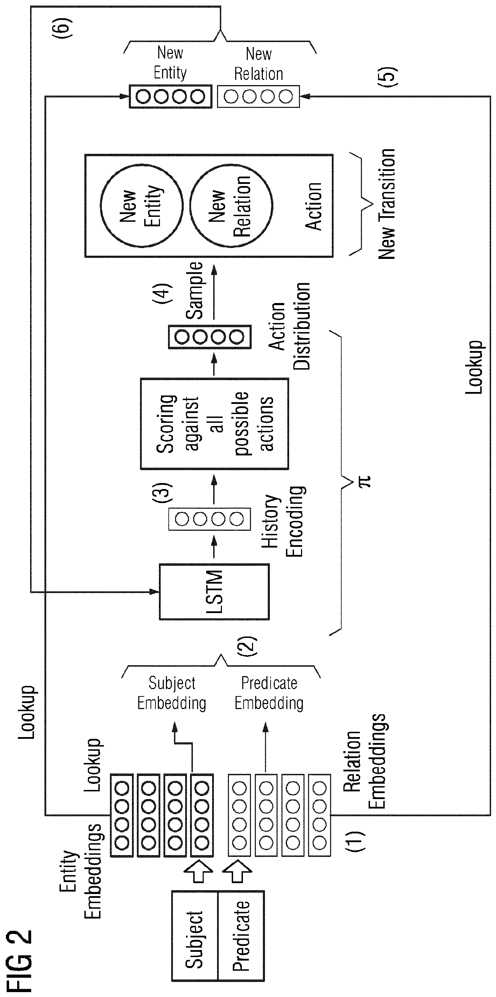

In a possible embodiment, the knowledge graph KG stored in the database has nodes and edges which are represented by vector space embeddings which can be used by the reinforcement learning agent in step S2 to navigate on the respective knowledge graph KG. A history of the transitions performed by the reinforcement learning agent in step S2 can further be stored and encoded by a recurrent neural network RNN and scored against the vector space embeddings of all possible transitions as also illustrated in Fig. 2.

The recurrent neural network RNN can be trained in a supervised training process using a set of true triples each comprising a subject s, a predicate p and an object o. Further, a set of logical rules R can be provided and incorporated in the training process of the respective recurrent neural network RNN wherein each logical rule R can comprise in a possible implementation a rule head and a rule body. Further, each logical rule R of the provided set of logical rules can comprise an associated confidence value. The different extracted paths ranked in step S4 can in a possible embodiment further be filtered according to the rule body of at least one logical rule R of the provided set of logical rules.

For each path extracted by the reinforcement learning agent during the training process, a positive reward is assigned to the reinforcement learning agent if the target entity of the respective extracted path is correct. Further, for each path extracted by the reinforcement learning agent during the training process, an additional positive reward can be assigned to the reinforcement learning agent if the extracted path also corresponds to a rule body of a logical rule R within the provided set of logical rules R. This additional positive reward can be derived in a possible implementation from the confidence value of the respective logical rule R. In a possible embodiment, a path is expanded stepwise by the reinforcement learning agent until a predefined maximum path length is reached.

With the computer-implemented method as illustrated in the flowchart of Fig. 1, it is possible for a given input query Q to create a candidate ranking of object entities such that the high-ranked objects correspond to true facts (s,p,o). The reinforcement learning agent used by the computer-implemented method can start at a subject entity s and does perform a policy-guided walk that does lead to a correct object or answer entity within the knowledge graph KG. In a possible implementation, a maximum path length can be predefined. For each step before reaching the maximum number of steps, i.e. predefined maximum path length, the reinforcement learning agent has the possibility to follow an outgoing edge to perform a transition to a neighboring node within the knowledge graph KG or to stay at the current node because no meaningful transitions are available. Inverse triples can also be included into the knowledge graph KG so that the reinforcement learning agent can also undo a previous transition. The actions, i.e. the nodes and edges along the path, until a current time step can be saved in a history of the reinforcement learning agent. Thereby, the nodes and edges can be represented via vector space embeddings and support the reinforcement learning agent to navigate on the knowledge graph KG. The history of the reinforcement learning agent is encoded in a preferred embodiment via a recurrent neural network RNN (e.g. an LSTM- or a GRU-based recurrent neural network RNN) and can be scored against the vector space embeddings of all possible actions or transitions. The next action or transition is sampled in a possible embodiment according to a categorical distribution derived from these scores. The encoder of the history along the embeddings induces a discrete stochastic policy which can be denoted as $\pi$ as also illustrated in the computation architecture of Fig. 2.

Fig. 2 illustrates a recurrent neural network RNN comprising LSTM neural network nodes with a history encoding of the reinforcement learning agent. The history of the transitions performed by the reinforcement learning agent is stored and encoded by the recurrent neural network RNN and scored against the vector space embeddings of all possible transitions or actions as also illustrated in Fig. 2. The next transition is sampled according to the categorical distribution derived from the scores.

The computation architecture shown in Fig. 2 operates as follows:

1. Subject entity and predicate are embedded (i.e. the corresponding vectors are extracted from a lookup table/ embedding matrix); the subject entity serves as the initial location of the agent in the knowledge graph.
2. Subject and predicate embeddings serve as input to the LSTM.

3. An encoding of the history is the output of the LSTM; this encoding is scored against all possible action embeddings (i.e., embeddings of the outgoing edges & target entities from the current location).
4. The scoring in the previous step induces a probability distribution over all possible actions and the next action (consisting of a new relation/edge and a new entity) is sampled from this distribution.
5. The new relation and the new entity are embedded & the location of the agent is set to the new entity.
6. The embeddings of the new relation are the input to the LSTM.
7. Return to step 3 and iterate until a maximum number of iterations is reached.

The policy function $\pi$ is given by the composition of the LSTM and the scoring in step (3).
During a training process of the recurrent neural network RNN, trainable parameters of the discrete stochastic policy $\pi$ (e.g. the embeddings and the parameters of the recurrent neural network RNN) can be trained in a supervisory training process using a supervision signal which can be induced by a set of triples that are known to be correct or true. Concretely, if a target entity of an extracted path is correct (i.e. (s,p,o) is known to be a true triple wherein o is a final location of the reinforcement learning agent), the reinforcement learning agent can get a positive reward. Otherwise, the reinforcement learning agent receives a reward of zero.
Further, a set of predefined logical rules R can be incorporated into the training process of the recurrent neural network RNN. Each logical rule R can comprise a rule head and a rule body (*head* ← *body*). The rule body of the logical rule R does correspond to a sequence of relations and placeholder entities in the form of $(\widehat{e_1}, p_1, \widehat{e_2}, \ldots, p_N, \widehat{e_N})$, wherein $p_i$ corresponds to specific relation types (constants) and $\widehat{e_i}$ are placeholders for generic entities (free variables). The rule body of a logical rule R is given by a triple $(\widehat{e_1}, p, \widehat{e_N})$, wherein $p$ is a relation type and $\widehat{e_1}, \widehat{e_N}$ are the first and the last entity of the rule body, respectively. A rule R can be interpreted as a link predictor. If it is possible to construct a path ($e_1$, $p_1$, $e_2$, ... , $p_N$, $e_N$) between $e_1$ and $e_N$ that does match the rule body of a logical rule R (i.e. the relation types of the observed path and the rule body do coincide), a link of type $p$ between $e_1$ and $e_N$ can be proposed.
Logical rules R can be either automatically mined from a dataset or can be provided by a domain expert who knows about relevant mechanisms for prediction via a user interface. The logical rules R can be assumed to be fuzzy, which means that they do not necessarily hold for all cases. It is possible to estimate the confidence of each logical rule R by computing the proportion of the observed data where the predicted link is correct ($|support(body \wedge head| / |support(body)|$). For each path extracted during the training process, it is possible to assign a positive reward to the reinforcement learning agent if the target entity is correct. Further, it is possible to compare the extracted path with the rule body of each logical rule R. If the path does correspond to the rule body of the logical rule R, an additional value is added to the reward. This additional value is a positive, monotonic transform of the confidence value of the respective logical rule R. Instead of using the confidence value, one can also apply other quality measures. By rewarding the reinforcement learning agent for walking along rule bodies, it is possible to enforce that the policy incorporates the logical rules R, especially logical rules R having a high confidence value.

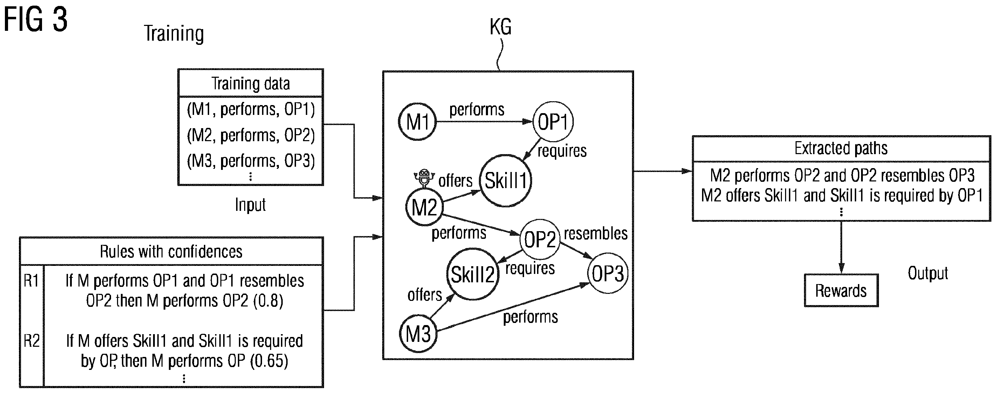

Fig. 3 illustrates an example of a workflow of a computer-implemented method according to the present invention during a training phase or training process for a skill matching use case. In the illustrated example of Fig. 3, the nodes represent as entities of the industrial manufacturing system production modules M, operations OP and operation skills. Given information about skill requirements, skill offerings and known matches, the model is learned such that it does produce predictions of new matches between modules M and operations OP along with an explanation for the respective match. In the illustrated example of Fig. 3, there are three production modules represented by nodes M1, M2, M3 in the knowledge graph KG. Further, there are production operations OP1, OP2, OP3. Skill1 and Skill2 are skills that can be offered by a production module M or can be required by a production operation OP. As training data, in the illustrated example, true facts are used from the knowledge graph KG about the operations OP which an operation module M can perform. Further, logical rules R with corresponding confidence values are part of the input.
For example, a possible logical rule R is:

$$(M, performs, OP2) \leftarrow (M, performs, OP1, resembles, OP2)$$

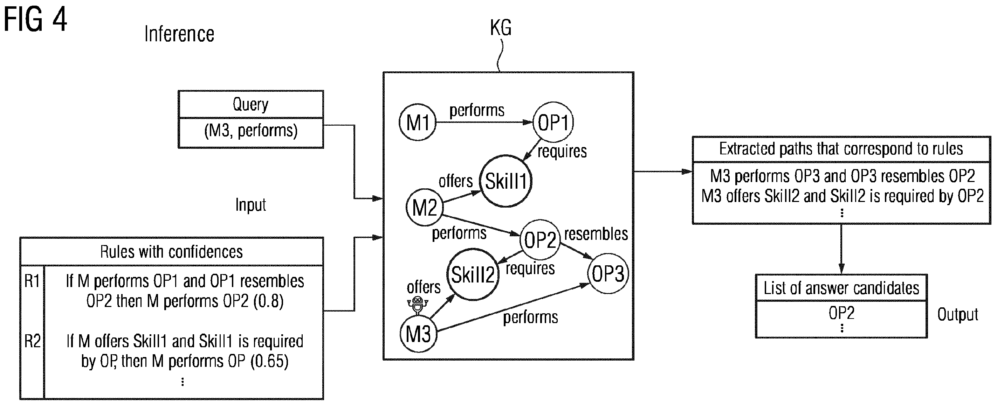

The logical rule R can for instance have an estimated confidence of 0.8 as also shown in Figs. 3, 4.
The reinforcement learning agent can start at a module entity and can extract different paths according to a predefined policy $\pi$. Depending on the target entity and the body of the extracted paths, a corresponding reward is assigned during the training process to the reinforcement learning agent. The resulting model does have learned parameters that maximize the expected rewards. Depending on if the target entity is correct and if the agent does follow a rule, a corresponding reward is assigned to the reinforcement learning agent. The learned parameters of the model can maximize the expected rewards. Fig. 3 shows in the middle a knowledge graph KG stored in a database. The reinforcement learning agent does perform policy-guided walks that should lead to correct target entities within the

knowledge graph KG.

During the training process, there are two kinds of inputs which are processed according to the computer-implemented method according to the present invention.

During training, not only a set of triples that are known to be correct are supplied as input but also logical rules R with associated confidences as shown in Fig. 3. A recurrent neural network RNN can be trained in the training phase or training process using a set of true triples each comprising a subject s, a predicate p, and an object o as also illustrated in Fig. 3. Further, a set of logical rules R is provided and incorporated in the training process of the recurrent neural network RNN wherein each logical rule R comprises a rule head and a rule body as also shown in the example of Fig. 3. Each logical rule R of the provided set of logical rules R comprises an associated confidence value. In the illustrated example, there are two rules R1, R2 within the supplied rule set, wherein the first rule R1 comprises a confidence value of 0.8 and the second rule R2 comprises a confidence value of 0.65. In the illustrated example of Fig. 3, there are two extracted paths. For each path extracted by the reinforcement learning agent during the training process, a positive reward is assigned to the reinforcement learning agent if the target entity of the respective extracted path is correct. Further, an additional positive reward can be assigned to the reinforcement learning agent during the training process if the extracted path also corresponds to a rule body of a logical rule R within the provided set of logical rules R. In a possible implementation, the additional positive reward can be derived from the confidence value of the respective logical rule R.

For example, the reward can be a positive monotonic transform of the confidence value of the respective rule.

After the training process has been completed, the trained model can be used for inference. Fig.4 illustrates an example of a workflow during inference. During inference, several rollouts can be made for each received query Q. Further, the extracted paths can be ranked in step S4 according to their calculated path probabilities. Moreover, the list of paths can be filtered according to the correspondence to the rule body of a rule R within the provided rule set. In a possible implementation, a candidate ranking of an extracted path can also be shown to domain experts on a display unit of a user interface. The domain experts may also provide feedback about the plausibility of the results.

The following shows a pseudocode of a computer-implemented method according to the present invention at inference time.

---

**Input:** a subject-predicate pair $(s, p)$; a set of rules $\mathcal{R}$ with head relation $p$<br>
$\mathcal{H} \leftarrow \emptyset$ // initialize set of paths<br>
**for** $i = 1, \ldots, N$ **do**<br>
  // sample the $i$-th rollout<br>
  $s_0 = s$ // initialize location of the agent<br>
  $H_i = (s)$ // initialize the history<br>
  $p_i \leftarrow 1$ // initialize path probability<br>
  **for** $j = 1, 2, \ldots, M$ **do**<br>
    // sample the $j$-th transition<br>
    $(p_1, p_2, \ldots) \leftarrow \pi(H_i)$ // Obtain transition probabilities from the policy $\pi$<br>
    Sample a transition $(r_j, e_j)$ with probability $p_j$<br>
    $p_i \leftarrow p_i * p_j$ // update path probability<br>
    $H_i \leftarrow H_i + (r_j, e_j)$ // expand the history (+ indicates the append operation)<br>
  **end**<br>
  Add $H_i$ to $\mathcal{H}$ if $H_i$ corresponds to the body of a rule in $\mathcal{R}$<br>
**end**<br>
**Output:** $\mathcal{H}$ ranked in descending order according to the path probabilities $p_i$ of paths in $\mathcal{H}$

---

As can be seen from the pseudocode, the input comprises a query Q having a subject-predicate pair s, p corresponding to a subject entity of the industrial manufacturing system. In the illustrated embodiment, as a further input a set of rules R is supplied with a head relation.

Fig. 4 illustrates an example of the computer-implemented method according to the present invention during inference. For example, it may be required to know which production operations production rule module M3 can perform. The reinforcement learning agent finds in the illustrated example two paths in the stored knowledge graph KG that follow logical rules R which do suggest that module M3 can also perform the production operation OP2. The output can be a list of operations that the production module M3 can perform sorted by a decreasing path probability. Further, the extracted path can serve as a human-understandable explanation of why a candidate object does form a possible answer to the query Q. Depending on the feedback, the rules R and the reward function can further be adapted to better reflect the domain knowledge and the problem setting. It is possible to interactively adapt the data model which can be flexibly modified according to the problem setting.

With the computer-implemented method, it is possible to expand and update the existing previously known knowledge graph KG having missing entities or relations. This updated knowledge graph KG stored in the database can be used to control and/or to monitor the respective industrial manufacturing system.

Since it comprises more complete knowledge, it can operate in a more reliable manner with less errors.

## Claims

1. A computer-implemented method for matching a production step to be performed in an industrial manufacturing system to a production module of a production facility of the industrial manufacturing system that offers operation skills for carrying out the production step, by prediction of relations in a knowledge graph, KG, representing an industrial manufacturing system and stored in a database,

   the method comprising the steps of:

   - receiving (S1) via an interface a query, Q, comprising a subject-predicate pair (s, p) corresponding to a subject entity of the industrial manufacturing system represented by a source node in the knowledge graph, KG, and to a relation of said subject entity represented by an edge from said source node;
   - performing (S2) automatically policy-guided transitions by a reinforcement learning agent starting from the source node of the knowledge graph, KG, along edges of the knowledge graph, KG, to target entities represented by target nodes of the knowledge graph, KG, to extract different paths between the source node and the target nodes, wherein for each performed transition, a transition probability is obtained from a discrete stochastic policy;
   - calculating (S3) a path probability for each extracted path on the basis of the obtained transition probabilities of the transitions between the source node and the target node of the respective path;
   - ranking (S4) the extracted paths according to the calculated path probabilities to select a target entity of said industrial manufacturing system output via said interface,
   - controlling the industrial manufacturing system using the selected target entity,

   wherein the stored knowledge graph, KG, of the industrial manufacturing system stored in the database comprises

   - nodes corresponding to entities of the industrial manufacturing system and
   - edges corresponding to relations between entities of the industrial manufacturing system,

   wherein the entities of the industrial manufacturing system represented by nodes of the knowledge graph, KG, comprise

   - production modules of a production facility,
   - production operations and
   - operation skills, and

   wherein the production modules are connected to various ports along a production line of the production facility and can be exchanged depending on the needs of a product to be manufactured.

2. The computer-implemented method according to any of the preceding claims wherein the knowledge graph, KG, stored in the database comprises a list of triples (s, p, o) wherein each triple includes:

   - a subject, s, corresponding to a source node of the knowledge graph, KG, representing a subject entity of the industrial manufacturing system,
   - an object, o, corresponding to a target node of the knowledge graph, KG, representing a target entity of the industrial manufacturing system, and
   - a predicate, p, corresponding to an edge of the knowledge graph, KG, between the source node and the target node of the knowledge graph, KG, and representing a relationship between the subject entity and the target entity of the industrial manufacturing system.

3. The computer-implemented method according to any of the preceding claims wherein the nodes and edges of the knowledge graph, KG, stored in the database are represented by vector space embeddings used by the reinforcement

learning agent to navigate on the knowledge graph, KG.

4. The computer-implemented method according to any of the preceding claims wherein a history of the transitions performed by the reinforcement learning agent is stored and encoded by a recurrent neural network, RNN, and scored against the vector space embeddings of all possible transitions.

5. The computer-implemented method according to claim 4 wherein the recurrent neural network, RNN, is trained in a supervised training process using a set of true triples (s, p, o) each comprising a subject, s, a predicate, p, and an object, o.

6. The computer-implemented method according to claim 5 wherein a set of logical rules, R, is provided and incorporated in the training process of the recurrent neural network, RNN, wherein each logical rule comprises a rule head and a rule body.

7. The computer-implemented method according to claim 6 wherein each logical rule of the provided set of logical rules comprises an associated confidence value.

8. The computer-implemented method according to any of the preceding claims wherein the ranked extracted paths are filtered according to the rule body of at least one logical rule of the provided set of logical rules.

9. The computer-implemented method according to any of the preceding claims wherein for each path extracted by the reinforcement learning agent during the training process a positive reward is assigned to the reinforcement learning agent if the target entity of the respective extracted path is correct.

10. The computer-implemented method according to any of the preceding claims wherein for each path extracted by the reinforcement learning agent during the training process an additional positive reward is assigned to the reinforcement learning agent if the extracted path corresponds to a rule body of a logical rule within the provided set of logical rules.

11. The computer-implemented method according to claim 10 wherein the additional positive reward assigned to the reinforcement learning agent during the training process is derived from the confidence value of the respective logical rule.

12. The computer-implemented method according to any of the preceding claims wherein a path is expanded stepwise by the reinforcement learning agent until a predefined maximum path length is reached.

13. A control apparatus for controlling an industrial manufacturing system which includes at least one production facility having production modules offering production skills to perform production operations on the basis of an industrial knowledge graph, KG, stored in a database connected to said control apparatus, wherein the control apparatus comprises an interface and a controller adapted to execute the computer-implemented method according to any of the preceding claims 1 to 12.

**Patentansprüche**

1. Computergestütztes Verfahren zum Zuordnen eines in einem industriellen Fertigungssystem durchzuführenden Produktionsschritts zu einem Produktionsmodul in einer Produktionsanlage in dem industriellen Fertigungssystem, die Einsatzfähigkeiten für das Ausführen des Produktionsschritts bietet, durch Prognose von Beziehungen in einem Wissensgraphen, KG, der ein industrielles Fertigungssystem darstellt und in einer Datenbank gespeichert ist,

   wobei das Verfahren folgende Schritte umfasst:

   - Empfangen (S1) einer Anfrage, Q, die ein Subjekt-Prädikat-Paar (s, p) umfasst, das einer Subjektentität des industriellen Fertigungssystems, welche von einem Quellknoten in dem Wissensgraphen, KG, dargestellt wird, und einer von einer von dem Quellknoten ausgehenden Kante dargestellten Beziehung der Subjektentität entspricht, über eine Schnittstelle,
   - automatisches Durchführen (S2) strategiegeleiteter Übergänge durch einen Reinforcement-Learning-Agenten ausgehend von dem Quellknoten des Wissensgraphen, KG, entlang von Kanten des Wissens-

graphen, KG, zu Zielentitäten, die von Zielknoten des Wissensgraphen, KG, dargestellt werden, zwecks Extrahierens verschiedener Wege zwischen dem Quellknoten und den Zielknoten, wobei für jeden durchgeführten Übergang anhand einer diskreten stochastischen Strategie eine Übergangswahrscheinlichkeit ermittelt wird,
- Berechnen (S3) einer Wegwahrscheinlichkeit für jeden extrahierten Weg auf der Grundlage der ermittelten Übergangswahrscheinlichkeiten für die Übergänge zwischen dem Quellknoten und dem Zielknoten des jeweiligen Wegs,
- Einstufen (S4) der extrahierten Wege entsprechend den berechneten Wegwahrscheinlichkeiten zwecks Auswählens einer über die Schnittstelle ausgegebenen Zielentität des industriellen Fertigungssystems,
- Steuern des industriellen Fertigungssystems unter Verwendung der ausgewählten Zielentität,

wobei der in der Datenbank gespeicherte Wissensgraph, KG, für das industrielle Fertigungssystem Folgendes umfasst:

- Knoten, die Entitäten in dem industriellen Fertigungssystem entsprechen, und
- Kanten, die Beziehungen zwischen Entitäten in dem industriellen Fertigungssystem entsprechen,

wobei die Entitäten in dem industriellen Fertigungssystem, die durch Knoten in dem Wissensgraphen, KG, dargestellt sind, Folgendes umfassen:

- Produktionsmodule in einer Produktionsanlage,
- Produktionsabläufe und
- Einsatzfähigkeiten, und

wobei die Produktionsmodule mit verschiedenen Anschlüssen entlang einer Produktionslinie in der Produktionsanlage verbunden sind und je nach den Anforderungen bei einem zu fertigenden Produkt ausgetauscht werden können.

**2.** Computergestütztes Verfahren nach einem der vorhergehenden Ansprüche, wobei der in der Datenbank gespeicherte Wissensgraph, KG, eine Liste Tripel (s, p, o) umfasst, wobei jedes Tripel Folgendes aufweist:

- ein Subjekt, s, das einem Quellknoten in dem Wissensgraphen KG entspricht, der eine Subjektentität in dem industriellen Fertigungssystem darstellt,
- ein Objekt, o, das einem Zielknoten in dem Wissensgraphen, KG, entspricht, der eine Zielentität in dem industriellen Fertigungssystem darstellt, und
- ein Prädikat, p, das einer Kante in dem Wissensgraphen, KG, zwischen dem Quellknoten und dem Zielknoten in dem Wissensgraphen, KG, entspricht und eine Beziehung zwischen der Subjektentität und der Zielentität in dem industriellen Fertigungssystem darstellt.

**3.** Computergestütztes Verfahren nach einem der vorhergehenden Ansprüche, wobei die Knoten und Kanten in dem in der Datenbank gespeicherten Wissensgraphen, KG, durch Vektorraumeinbettungen dargestellt werden, die der Reinforcement-Learning-Agent zum Navigieren im Wissensgraphen KG benutzt.

**4.** Computergestütztes Verfahren nach einem der vorhergehenden Ansprüche, wobei ein Verlauf der von dem Reinforcement-Learning-Agenten durchgeführten Übergänge gespeichert und von einem rekurrenten neuronalen Netz, RNN, codiert und im Vergleich zu den Vektorraumeinbettungen aller möglichen Übergänge bewertet wird.

**5.** Computergestütztes Verfahren nach Anspruch 4, wobei das rekurrente neuronale Netz, RNN, in einem überwachten Trainingsprozess unter Verwendung eines Satzes echter Tripel (s, p, o) trainiert wird, die jeweils ein Subjekt, s, ein Prädikat, p, und ein Objekt, o, umfassen.

**6.** Computergestütztes Verfahren nach Anspruch 5, wobei ein Satz logischer Regeln, R, bereitgestellt und in den Trainingsprozess für das rekurrente neuronale Netz, RNN, integriert wird, wobei jede logische Regel einen Regelkopf und einen Regelrumpf umfasst.

**7.** Computergestütztes Verfahren nach Anspruch 6, wobei jede logische Regel in dem bereitgestellten Satz logischer Regeln einen zugehörigen Konfidenzwert umfasst.

8. Computergestütztes Verfahren nach einem der vorhergehenden Ansprüche, wobei die eingestuften extrahierten Wege dem Regelrumpf mindestens einer logischen Regel aus dem bereitgestellten Satz logischer Regeln entsprechend gefiltert werden.

9. Computergestütztes Verfahren nach einem der vorhergehenden Ansprüche, wobei dem Reinforcement-Learning-Agenten für jeden im Verlauf des Trainingsprozesses von ihm extrahierten Weg eine Belohnung zugewiesen wird, wenn die Zielentität des jeweiligen extrahierten Wegs richtig ist.

10. Computergestütztes Verfahren nach einem der vorhergehenden Ansprüche, wobei dem Reinforcement-Learning-Agenten für jeden im Verlauf des Trainingsprozesses von ihm extrahierten Weg ein weiterer positiver Zuschlag zugewiesen wird, wenn der extrahierte Weg einem Regelrumpf einer logischen Regel innerhalb des bereitgestellten Satzes logischer Regeln entspricht.

11. Computergestütztes Verfahren nach Anspruch 10, wobei der dem Reinforcement-Learning-Agenten im Verlauf des Trainingsprozesses zugewiesene zusätzliche positive Zuschlag von dem Konfidenzwert für die jeweilige logische Regel abgeleitet wird.

12. Computergestütztes Verfahren nach einem der vorhergehenden Ansprüche, wobei ein Weg von dem Reinforcement-Learning-Agenten schrittweise erweitert wird, bis eine vorgegebene maximale Weglänge erreicht ist.

13. Steuervorrichtung zum Steuern eines industriellen Fertigungssystems, das mindestens eine Produktionsanlage mit Produktionsmodulen aufweist, die Einsatzfähigkeiten zum Durchführen von Produktionsabläufen auf der Grundlage eines industriellen Wissensgraphen, KG, bieten, der in einer mit der Steuervorrichtung verbundenen Datenbank gespeichert ist, wobei die Steuervorrichtung eine Schnittstelle und eine Steuerung umfasst, die so ausgelegt ist, dass sie das computergestützte Verfahren nach einem der vorhergehenden Ansprüche 1 bis 12 ausführt.

**Revendications**

1. Procédé mis en œuvre par ordinateur pour mettre en correspondance une étape de production à réaliser dans un système de fabrication industrielle avec un module de production d'une installation de production du système de fabrication industrielle qui offre des compétences opérationnelles pour effectuer l'étape de production, par prédiction des relations dans un graphe de connaissances, KG, représentant un système de fabrication industrielle et stocké dans une base de données, le procédé comprenant les étapes de :

    - réception (S1), via une interface, d'une requête, Q, comprenant une paire sujet-prédicat (s, p) correspondant à une entité sujet du système de fabrication industrielle représentée par un nœud source dans le graphe de connaissances, KG, et à une relation de ladite entité sujet représentée par une arête partant dudit nœud source ;
    - réalisation (S2) automatique de transitions guidées par une politique par un agent d'apprentissage par renforcement, en partant du nœud source du graphe de connaissances, KG, le long des arêtes du graphe de connaissances, KG, vers des entités cibles représentées par des nœuds cibles du graphe de connaissances, KG, afin d'extraire différents chemins entre le nœud source et les nœuds cibles, dans lequel, pour chaque transition réalisée, une probabilité de transition est obtenue à partir d'une politique stochastique discrète ;
    - calcul (S3) d'une probabilité de chemin pour chaque chemin extrait sur la base des probabilités de transition obtenues des transitions entre le nœud source et le nœud cible du chemin correspondant ;
    - classement (S4) des chemins extraits selon les probabilités de chemin calculées afin de sélectionner une entité cible dudit système de fabrication industrielle via ladite interface,
    - commande du système de fabrication industrielle en utilisant l'entité cible sélectionnée,

    dans lequel le graphe de connaissances, KG, stocké du système de fabrication industrielle stocké dans la base de données, comprend

    - des nœuds correspondant à des entités du système de fabrication industrielle et
    - des arêtes correspondant à des relations entre les entités du système de fabrication industrielle,

    dans lequel les entités du système de fabrication industrielle représentées par les nœuds du graphe de connaissances, KG, comprennent

    - des modules de production d'une installation de production,
    - des opérations de production et
    - des compétences opérationnelles, et

    dans lequel les modules de production sont connectés à divers ports le long d'une ligne de production de

l'installation de production et peuvent être remplacés en fonction des besoins d'un produit à fabriquer.

2. Procédé mis en œuvre par ordinateur selon l'une des revendications précédentes, dans lequel le graphe de connaissances, KG, stocké dans la base de données comprend une liste de triplets (s, p, o) dans laquelle chaque triplet comprend :

   - un sujet, s, correspondant à un nœud source du graphe de connaissances, KG, représentant une entité sujet du système de fabrication industrielle,
   - un objet, o, correspondant à un nœud cible du graphe de connaissances, KG, représentant une entité cible du système de fabrication industrielle, et
   - un prédicat, p, correspondant à une arête du graphe de connaissances, KG, entre le nœud source et le nœud cible du graphe de connaissances, KG, et représentant une relation entre l'entité sujet et l'entité cible du système de fabrication industrielle.

3. Procédé mis en œuvre par ordinateur selon l'une des revendications précédentes, dans lequel les nœuds et les arêtes du graphe de connaissances, KG, stocké dans la base de données sont représentés par des plongements dans un espace vectoriel utilisés par l'agent d'apprentissage par renforcement pour naviguer sur le graphe de connaissances, KG.

4. Procédé mis en œuvre par ordinateur selon l'une des revendications précédentes, dans lequel l'historique des transitions réalisées par l'agent d'apprentissage par renforcement est stocké et codé par un réseau neuronal récurrent, RNN, puis évalué par rapport aux plongements dans un espace vectoriel de toutes les transitions possibles.

5. Procédé mis en œuvre par ordinateur selon la revendication 4, dans lequel le réseau neuronal récurrent, RNN, est entraîné dans un processus d'entraînement supervisé en utilisant un ensemble de triplets vrais (s, p, o) comprenant chacun un sujet, s, un prédicat, p, et un objet, o.

6. Procédé mis en œuvre par ordinateur selon la revendication 5, dans lequel un ensemble de règles logiques, R, est fourni et intégré au processus d'entraînement du réseau neuronal récurrent, RNN, dans lequel chaque règle logique comprend une tête de règle et un corps de règle.

7. Procédé mis en œuvre par ordinateur selon la revendication 6, dans lequel chaque règle logique de l'ensemble de règles logiques fourni comprend une valeur de confiance associée.

8. Procédé mis en œuvre par ordinateur selon l'une des revendications précédentes, dans lequel les chemins extraits classés sont filtrés selon le corps de règle d'au moins une règle logique de l'ensemble de règles logiques fourni.

9. Procédé mis en œuvre par ordinateur selon l'une des revendications précédentes, dans lequel, pour chaque chemin extrait par l'agent d'apprentissage par renforcement au cours du processus d'entraînement, une récompense positive est attribuée à l'agent d'apprentissage par renforcement si l'entité cible du chemin extrait correspondant est correcte.

10. Procédé mis en œuvre par ordinateur selon l'une des revendications précédentes, dans lequel, pour chaque chemin extrait par l'agent d'apprentissage par renforcement au cours du processus d'entraînement, une récompense positive supplémentaire est attribuée à l'agent d'apprentissage par renforcement si le chemin extrait correspond au corps de règle d'une règle logique dans l'ensemble de règles logiques fourni.

11. Procédé mis en œuvre par ordinateur selon la revendication 10, dans lequel la récompense positive supplémentaire attribuée à l'agent d'apprentissage par renforcement au cours du processus d'entraînement est dérivée de la valeur de confiance de la règle logique correspondante.

12. Procédé mis en œuvre par ordinateur selon l'une des revendications précédentes, dans lequel un chemin est développé par étapes par l'agent d'apprentissage par renforcement jusqu'à ce qu'une longueur de chemin maximale prédéfinie soit atteinte.

13. Appareil de commande pour commander un système de fabrication industrielle qui comprend au moins une installation de production ayant des modules de production offrant des compétences de production pour réaliser des opérations de production sur la base d'un graphe de connaissances, KG, industriel stocké dans une base de données connectée audit appareil de commande,

dans lequel l'appareil de commande comprend une interface et une unité de commande adaptées pour exécuter le procédé mis en œuvre par ordinateur selon l'une des revendications précédentes 1 à 12.

FIG 1

S1
S2
S3
S4

FIG 2
Subject
Predicate
Entity Embeddings
Lookup
Relation Embeddings
(1)
Lookup
Subject Embedding
Predicate Embedding
(2)
LSTM
History Encoding
(3)
Scoring against all possible actions
Action Distribution
π
(4)
Sample
New Entity
New Relation
Action
New Transition
New Entity
New Relation
(5)
Lookup
(6)

FIG 3
Training
Training data
(M1, performs, OP1)
(M2, performs, OP2)
(M3, performs, OP3)
⋮
Input
Rules with confidences
R1
If M performs OP1 and OP1 resembles OP2 then M performs OP2 (0.8)
R2
If M offers Skill1 and Skill1 is required by OP, then M performs OP (0.65)
⋮
KG
M1
performs
OP1
requires
Skill1
offers
M2
performs
OP2
resembles
OP3
requires
Skill2
offers
M3
performs
Extracted paths
M2 performs OP2 and OP2 resembles OP3
M2 offers Skill1 and Skill1 is required by OP1
⋮
Rewards
Output

FIG 4
Inference
Query
(M3, performs)
Input
Rules with confidences
R1
If M performs OP1 and OP1 resembles OP2 then M performs OP2 (0.8)
R2
If M offers Skill1 and Skill1 is required by OP, then M performs OP (0.65)
⋮
KG
M1
performs
OP1
requires
Skill1
offers
M2
performs
OP2
resembles
OP3
requires
Skill2
offers
M3
performs
Extracted paths that correspond to rules
M3 performs OP3 and OP3 resembles OP2
M3 offers Skill2 and Skill2 is required by OP2
⋮
List of answer candidates
OP2
⋮
Output

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **YUSHAN LIU et al.** Integrating Logical Rules Into Neural Multi-Hop Reasoning for Drug Repurposing. *ARXIV.ORG*, 10 July 2020